# EUROPÄISCHE PATENTANMELDUNG

(11) **EP 2 173 062 A1**
(43) Veröffentlichungstag der Anmeldung: **07.04.2010**
(21) Anmeldenummer: 08017423.8
(22) Anmeldetag: 02.10.2008
(51) Int. Cl.: H04L 12/26

(54) **Kommunikationseinrichtung zum passiven Mithören**

(71) Anmelder: Siemens Aktiengesellschaft, 80333 München (DE)
(72) Erfinder: Völkel, Thomas, 90518 Altdorf (DE)

(57) **Zusammenfassung**

Erfindungsgemäß wird eine Kommunikationseinrichtung (1) mit einem ersten Slave (2) und einem Master (3)angegeben, die über eine Datenleitung (4) zur Kommunikation miteinander verbunden sind. Zum Mithören der auf der Datenleitung (4) übertragenen Daten sind dabei entsprechende Mittel (5)vorgesehen, die mit einem passiven zweiten Slave (6) informationstechnisch verbunden sind. Dieser zweite Slave (6) ist nicht direkt an die Datenleitung (4) angeschlossen.

## Beschreibung

Die Erfindung betrifft eine Kommunikationseinrichtung mit einem ersten Slave und einem Master, die über eine Datenleitung zur Kommunikation miteinander verbunden sind.

Derartige Kommunikationseinrichtungen mit einer Punkt-zu-Punkt-Verbindung von einem Master und einem Slave finden in der Praxis Anwendung. Um ein weiteres beziehungsweise weitere Slave-Geräte anzubinden, wären entsprechend zusätzliche Kanäle am Master notwendig. Bestimmte Slaves stehen in einer funktionalen Beziehung zueinander, bei der nur der jeweils aktive Slave direkt an die Kommunikationsverbindung angeschlossen sein muss, um z.B. aktiv Befehle an den Master zu senden. Dagegen genügt es, wenn der passive Slave von den zwischen dem aktiven Slave und dem Master kommunizierten Daten Kenntnis hat.

Der Erfindung liegt daher die Aufgabe zugrunde, eine Kommunikationseinrichtung der oben genannten Art vorzuschlagen, bei der ein zusätzlicher Slave auf einfache Weise von den zwischen dem aktiven Slave und dem Master kommunizierten Daten Kenntnis nehmen kann.

Die Aufgabe wird mit den Merkmalen nach Anspruch 1 gelöst. Dabei sind in der Kommunikationseinrichtung der oben genannten Art Mittel zum Mithören der auf der Datenleitung übertragenen Daten vorhanden, wobei die Mittel mit einem zweiten Slave verbunden sind, der nicht direkt an die Datenleitung angeschlossen ist.

Vorteilhafte Weiterbildungen der erfindungsgemäßen Kommunikationseinrichtung sind den Unteransprüchen 2 bis 6 zu entnehmen.

Besonders vorteilhaft ist es, wenn gemäß Anspruch 2 die Mittel in der Art ausgebildet sind, dass sie die Daten induktiv aus dem Streufeld der Datenleitung auskoppeln.

Eine vorteilhafte Weiterbildung besteht, wenn gemäß Anspruch 3 die Mittel im zweiten Slave integriert sind.

Weiterhin ist es vorteilhaft, wenn gemäß Anspruch 4 eine Logik zur Auswertung und/oder Verarbeitung der über die Mittel zum Mithören erhaltenen Daten vorgesehen ist.

Von Vorteil ist es außerdem, wenn gemäß Anspruch 5 die Logik mit dem zweiten Slave verbunden oder in diesem integriert ist.

Vorteilhafter Weise weist gemäß Anspruch 6 der zweite Slave eine Schnittstelle zur Abgabe von Steuerbefehlen auf, die abhängig von den in der Logik ausgewerteten und/oder verarbeiteten Daten sind.

Ein Ausführungsbeispiel der Erfindung wird im Folgenden anhand einer Zeichnung näher erläutert. Es zeigen:
- FIG 1: eine erfindungsgemäße Kommunikationseinrichtung mit einem den Datenverkehr zwischen einem Master und einem ersten Slave mithörenden zweiten Slave und
- FIG 2: eine Kommunikationseinrichtung gemäß FIG 1 mit einer besonderen Ausführung des zweiten Slaves.

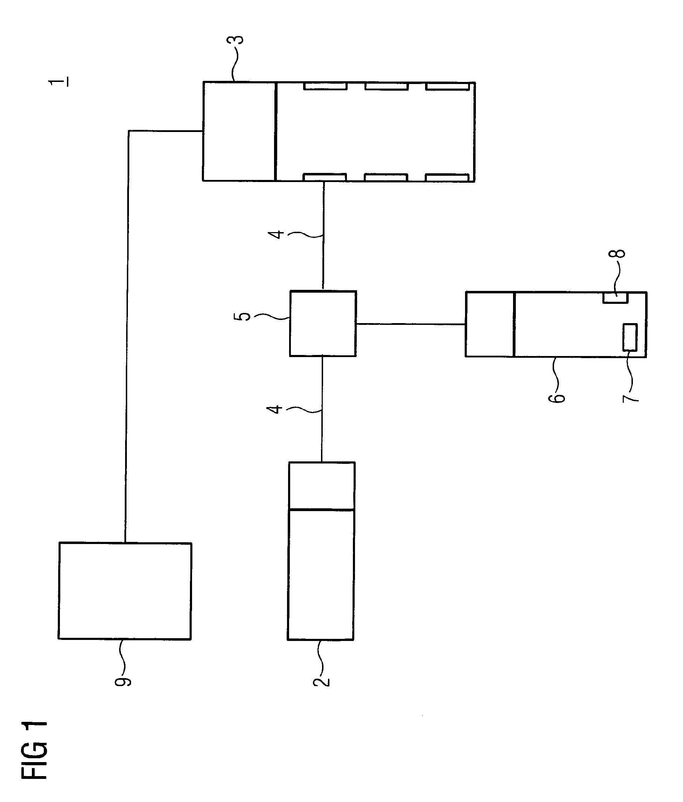

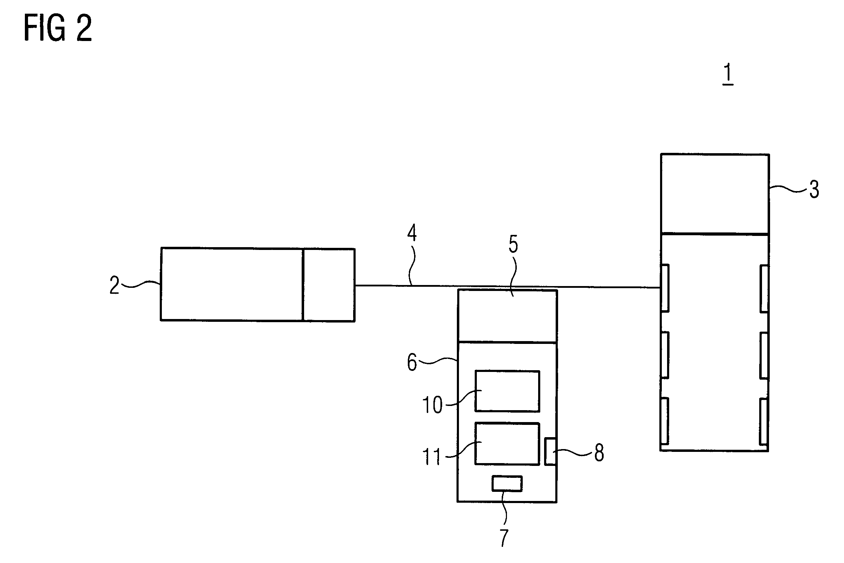

In FIG 1 ist eine Kommunikationseinrichtung 1 mit einem ersten Slave 2 und einem Master 3 dargestellt, die über eine Datenleitung 4 zur bidirektionalen Kommunikation miteinander verbunden sind. Zum Mithören der auf der Datenleitung 4 übertragenen Daten sind Mittel 5 vorgesehen, die mit einem zweiten Slave 6 informationstechnisch verbunden sind. Der zweite Slave 6 ist nicht direkt an die Datenleitung 4 angeschlossen. Die informationstechnische Verbindung zwischen den Mitteln 5 und dem zweiten Slave 6 kann drahtgebunden oder drahtlos ausgeführt sein. Die Mittel 5 sind zum Beispiel in der Art ausgebildet, dass sie die Daten aus dem Streufeld der Datenleitung 4 induktiv auskoppeln. Die Mittel 5 sind bei der Ausführungsform gemäß FIG 2 im zweiten Slave 6 integriert. Die Kommunikationseinrichtung 1 weist eine Logik 7 zur Auswertung und/oder Verarbeitung der über die Mittel 5 zum Mithören erhaltenen Daten auf. Die Logik 7 ist mit dem zweiten Slave 6 verbunden oder in diesem, wie in FIG 1 und 2 dargestellt, integriert.

Der zweite Slave 6 weist eine Schnittstelle 8 zur Abgabe von Steuerbefehlen auf, die abhängig von den in der Logik 7 ausgewerteten und/oder verarbeiteten Daten sind.

Die Kommunikationseinrichtung 1 ist üblicherweise über den Master 3 an ein Automatisierungssystem 9 gemäß FIG 1 angebunden.

In einer besonderen Ausprägung der Erfindung ist der zweite Slave 6 als Monitor mit einem Sensorkopf ausgeführt, der die Mittel 5 zum Mithören beinhaltet. Wird der Sensorkopf in die Nähe der Datenleitung 4 gebracht, ist dieser in der Lage aufgrund des Streufeldes die übertragenen Telegramminformationen zu detektieren. Der Sensorkopf kann aber auch abgesetzt realisiert sein. Die Daten vom Sensorkopf werden in der Logik 7 verarbeitet und auf einem Anzeigeelement 10 dargestellt. Die Art der Darstellung kann über ein Bedienelement 11 konfiguriert werden.

Nachdem der zweite Slave 6 den Datenverkehr auf der Datenleitung 4 mithören kann, ist er in der Lage ggf. übermittelte parametrierte Funktionen auszuführen. Hierbei ist es möglich, dass in den Datentelegrammen Kennungen enthalten sind, über die der zweite Slave 6 direkt angesprochen werden kann. Dies bedeutet, dass dezidiert Daten an den zweiten Slave 6 gesendet werden können. Der zweite Slave 6 ist nur passiv ausgeführt, d.h. er kann die Kommunikation nicht aktiv beeinflussen. Daher ist eine Quittierung der übermittelten Daten nicht möglich.

## Patentansprüche

1. Kommunikationseinrichtung (1) mit einem ersten Slave (2) und einem Master (3), die über eine Datenleitung (4) zur Kommunikation miteinander verbunden sind, **dadurch gekennzeichnet, dass** Mittel (5) zum Mithören der auf der Datenleitung (4) übertragenen Daten vorgesehen sind, wobei die Mittel (5) mit einem zweiten Slave (6) informationstechnisch verbunden sind, der nicht direkt an die Datenleitung (4) angeschlossen ist.

2. Kommunikationseinrichtung nach Anspruch 1, **dadurch gekennzeichnet, dass** die Mittel (5) in der Art ausgebildet sind, dass sie die Daten aus dem Streufeld der Datenleitung (4) induktiv auskoppeln.

3. Kommunikationseinrichtung nach Anspruch 1 oder 2, **dadurch gekennzeichnet, dass** die Mittel (5) im zweiten Slave (6) integriert sind.

4. Kommunikationseinrichtung nach einem der vorangehenden Ansprüche, **dadurch gekennzeichnet, dass** eine Logik (7) zur Auswertung und/oder Verarbeitung der über die Mittel (5) zum Mithören erhaltenen Daten vorgesehen ist.

5. Kommunikationseinrichtung nach Anspruch 4, **dadurch gekennzeichnet, dass** die Logik (7) mit dem zweiten Slave (6) verbunden oder in diesem integriert ist.

6. Kommunikationseinrichtung nach Anspruch 5, **dadurch gekennzeichnet, dass** der zweite Slave (6) eine Schnittstelle (8) zur Abgabe von Steuerbefehlen aufweist, die abhängig von den in der Logik (7) ausgewerteten und/oder verarbeiteten Daten sind.
